# EUROPÄISCHE PATENTANMELDUNG

(11) **EP 4 105 428 A1**
(43) Veröffentlichungstag der Anmeldung: **21.12.2022**
(21) Anmeldenummer: 21179851.7
(22) Anmeldetag: 16.06.2021
(51) Int. Cl.: E06B 3/20, B29C 48/00

(54) **EXTRUSIONSPROFIL, VERFAHREN ZUM HERSTELLEN EINES EXTRUSIONSPROFILS UND TÜR- UND/ODER FENSTERTEIL**

(71) Anmelder: Salamander Industrie-Produkte GmbH, 86842 Türkheim (DE)
(72) Erfinder: Schmiedeknecht, Till, 80992 München (DE)
(74) Vertreter: Schmid, Nils T.F.

(57) **Zusammenfassung**

Die vorliegende Erfindung betrifft ein Extrusionsprofil, insbesondere ein Koextrusionsprofil oder ein Monoextrusionsprofil, für ein Fenster- und/oder Türteil, insbesondere ein Fenster- und/oder Türrahmenteil oder ein Fenster- und/oder Türflügelteil, umfassend eine, eine Außenseite des Extrusionsprofils bildende Profilwand aus Kunststoff und einen von der Profilwand umhüllten Schaumstoffkern aus PET.

## Beschreibung

Die vorliegende Erfindung betrifft ein Extrusionsprofil insbesondere aus Kunststoff, wie PVC, für ein Tür- und/oder ein Fenstersystem beispielweise eines Passivhauses. Des Weiteren betrifft die vorliegende Erfindung auch ein Verfahren zum Herstellen eines Extrusionsprofils. Ferner stellt die vorliegende Erfindung ein Tür- und/oder ein Fenstersystem mit einem Extrusionsprofil bereit.

Üblicherweise weisen PVC-Extrusionsprofile für Fenster und/oder Türen sowohl eine Stahlversteifung aus Statikgründen und zur Ermöglichung der Verschraubung von Beschlägen als auch eine Dämmstofffüllung entweder aus PS oder EPS auf, um einen guten Wärmedurchgangskoeffizient (U-Wert) zu erreichen. Beispielsweise werden rollverformte Stahlprofile eingesetzt, welche auf der einen Seite der Statik der Fenster und gleichzeitig als Schraubgrundlage für die Beschläge dienen. Um einen deutlich verbesserten U-Wert zu erreichen, ist es notwendig, Dämmmaterial aus PS- oder EPS-Schaumstoff in die Hohlkammern der Extrusionsprofil einzubringen. Beispielsweise werden die Dämmmaterialen in die Stahlversteifungen in den Hohlkammern der Extrusionsprofile eingeschoben oder vollständig ausgeschäumt, sodass der Schaumstoff eine feste Verbindung mit den Stahlversteifungen eingeht. Der Einsatz von Stahlprofilen ist außerdem insofern erforderlich, als diese als Gegenlager für die Verschraubung im Mauerwerk und der Beschläge dienen.

DE102008009495A1 offenbart ein derartiges bekanntes PU-Fensterrahmenprofil mit einer Hohlkammer und einem diese vollständig ausfüllenden Schaumstoff-Dämmmaterial. In den Dämmstoff sind zusätzliche Verstärkungselemente in Form von stabilitätserhöhenden Fasereinlagen, Rohren aus Kunststoff oder einem Faserverbundmaterial oder eines Beschlagteils zur Gewährleistung der erforderlichen mechanischen Stabilität des Fensterrahmenprofils eingebracht. Die Verstärkungselemente werden bereits beim Schäumen des Schaumstoff-Dämmmaterials in das Formwerkzeug gelegt und von dem Schaumstoff umspritzt. Anschließend wird das mit dem Verstärkungselement versteifte Schaumstoff-Dämmmaterial in einem Spritzgießvorgang von einer starren Polyurethan-Umhüllung umspritzt. Nachteilig an derartigen Fensterrahmenprofilen sind die aufwändige Herstellung sowie die hohe Komponentenzahl, um zum einen eine ausreichende Festigkeit bzw. Steifigkeit der Extrusionsprofile sowie zum anderen eine ausreichende Dämmwirkung sicherzustellen.

Es ist Aufgabe der vorliegenden Erfindung, die Nachteile aus dem bekannten Stand der Technik zu verbessern, insbesondere ein einfacher und/oder kostengünstiger herzustellendes Extrusionsprofil bereitzustellen, das insbesondere eine höhere Steifigkeit und/oder eine bessere Dämmwirkung besitzt.

Diese Aufgabe wird durch die Merkmale der unabhängigen Ansprüche gelöst.

Danach ist ein Profil, insbesondere ein Extrusionsprofil, insbesondere ein Koextrusionsprofil oder Monoextrusionsprofil, für ein Tür- und/oder Fensterteil beispielsweise eines Tür- und/oder Fenstersystems, insbesondere für ein Tür- und/oder Fensterrahmenteil, beispielsweise eines Passivhauses, bereitgestellt. Das Extrusionsprofil ist durch ein Extrusionsverfahren hergestellt, das im Hinblick auf große Produktionsmengen kostengünstig und energieeffizient ist. Das Extrusionsprofil ist durch eine Extrusionsrichtung definiert, die die Längsrichtung des Extrusionsprofils festlegt, in welche sich das Extrusionsprofil im Querschnitt im Wesentlichen nicht ändert. Die erfindungsgemäßen Extrusionsprofile können beispielsweise für Tür- und/oder Fenstersysteme eingesetzt werden, die einen Tür- und/oder Fensterprofilrahmen, beispielsweise ein Rahmenprofil eines verschwenkbaren oder linearen verschiebbaren Schiebeflügels, ein Rahmenprofil eines ortsfesten sogenannten Standflügels, eines Stulpflügels oder eines Pfostens, ein Profilrahmen von Tür- und/oder Fensterrahmen in Gebäudewandeinfassungen, wie ein Zargenprofil, oder ergänzende Rahmenteile, wie beispielsweise ein Futterleistenprofil oder ein Stulpprofil.

Das Profil umfasst einen Schaumstoffkern aus PET. Der PET-Schaumstoffkern wirkt als Dämmmaterial, insbesondere um einen gewünschten U-Wert zu erreichen. Der PET-Schaumstoffkern kann beispielsweise aus einer Plattenware aus PET-Schaum hergestellt werden, beispielsweise mittels Sägen und/oder Fräsen. Alternativ kann der PET-Schaumstoffkern durch ein urformendes Herstellungsverfahren, beispielsweise im Extrusionsverfahren aus PET-Granulat und/oder -Recyclat unter Aufschäumen der PET-Schmelze in einem entsprechend formgebenden Werkzeugsystem hergestellt werden.

Ferner umfasst das Profil eine eine Außenseite des Profils bildende Profilwand, insbesondere Hohlprofilwand, aus Kunstsoff, beispielsweise PVC, die um den Schaumstoffkern umextrudiert ist. Mit andere Worten ist die Profilwand extrudiert, insbesondere im Extrusionsverfahren hergestellt und/oder auf den Schaumstoffkern aufextrudiert. Auf diese Weise kann ein erfindungsgemäßes Profil einfach durch ein im Wege des Extrudierens erreichtes Umhüllen des Schaumstoffkerns mit einer Kunststoff-Profilwand hergestellt werden. Die Umhüllung des Schaumstoffkerns mittels der Kunststoff-Profilwand erfolgt im Extrusionswerkzeug für die Kunststoff-Profilwand. Mit anderen Worten wird der Schaumstoffkern von der Kunststoff-Profilwand ummantelt, und zwar dadurch, dass das Umhüllen beziehungsweise Ummanteln des PET-Schaumstoffkerns mit der Kunststoff-Profilwand während der Herstellung, also während der Extrusion, der Kunststoff-Profilwand erfolgt. Die Umhüllung beziehungsweise Ummantelung ist demnach in das standardgemäße Extrusionsverfahren zum Herstellen von Kunststoff-Profilwänden für Fenster- und/oder Türteile integrierbar. Durch das Umextrudieren des Schaumstoffkerns mit der Profilwand geht eine besonders formgenaue Verbindung von Schaumstoffkern und Profilwand einher. Als Verbindung ist dabei nicht notwendigerweise eine stoffschlüssige Verbindung von Schaumstoffkern und Profilwand zu verstehen, sondern grundsätzlich eine Anordnung des Schaumstoffkerns innerhalb der Profilwand. Mit anderen Worten ist die Profilwand auf den Schaumstoffkern aufextrudiert. Dadurch kann sich die Profilwand insbesondere formgenau und/oder formanpassend an die Außenseite des Schaumstoffkerns anschmiegen. Beispielsweise kann das Umextrudieren so erfolgen, dass eine Relativbewegung von Schaumstoffkern und Profilwand quer zur Extrusionsrichtung von höchstens 1,5 mm, insbesondere von höchstens 1 mm oder von höchstens 0,5 mm, vorzugsweise ausgeschlossen ist, zugelassen ist. Beispielsweise kann das Umextrudieren so eingestellt sein, dass wenigstens im Bereich der einander zugewandten Grenzflächen von Schaumstoffkern und Profilwand eine materialschlüssige Verbindung einhergeht. Ein Vorteil des Umextrudierens besteht darin, dass es möglich ist, auf herstellungstechnisch einfache Art und Weise beliebige Profilquerschnitte herzustellen. Durch das Umextrudieren des Schaumstoffkerns ist es möglich, für beliebige Querschnitte des Schaumstoffkerns eine Profilwand herzustellen.

Ferner wird durch das Umextrudieren erreicht, dass keine oder nur minimale Spaltbereiche zwischen Außenkontur des Schaumstoffkerns und Innenkontur der Hohlprofilwand resultieren. Spaltbereiche können beispielsweise infolge der herstellungsbedingten Fertigungstoleranzen bei der Schaumstoffkern-Herstellung sich ergeben. An der Außenkontur des Schaumstoffkerns können Bearbeitungs- und/oder Handlingsspuren vorhanden sein, die auf eine nachträgliche Oberflächenbearbeitung und/oder Handhabung des Schaumstoffkerns zurückzuführen sind. Es wurde herausgefunden, dass die umextrudierte Hohlprofilwand an der Grenzfläche zum Schaumstoffkern dessen Oberflächenstruktur wenigstens bereichsweise nachbildet. Dies hängt insbesondere damit zusammen, dass der Kunststoff der Hohlprofilwand beim Umspritzen weich ist und sich somit anschmiegen kann, um beispielsweise reliefartig die Oberflächenstruktur des Schaumstoffkerns nachzubilden.

Beispielsweise ist die Profilwand quer zur Extrusionsrichtung, also in Umfangsrichtung, vollständig geschlossen und umgibt den Schaumstoffkern vollständig beziehungsweise umhüllt diesen vollständig. Beispielsweise kann der Schaumstoffkern in Umfangsrichtung betrachtet vollständig an der Profilwand anliegen. Ein wesentlicher Vorteil des erfindungsgemäßen Profils besteht darin, dass ein besonders kostengünstiges Profil mit verbesserten Kennwerten, wie Gewicht, Festigkeit und U-Wert, geschaffen werden kann. Die Kombination aus einem PET-Schaumstoffkern und einer Kunststoff-Hohlprofilwand beispielsweise aus PVC hat sich insofern als vorteilhaft erwiesen, als der Schaumstoffkern aus PET Druckkräfte aufnimmt, während die Kunststoffaußenhülle Zugkräfte aufnimmt. Insofern funktioniert das Profil ähnlich wie ein Fachwerkträger. Beispielsweise besitzt der Schaumstoffkern eine Druckfestigkeit von mindestens 0,3 N/mm², insbesondere von mindestens 0,5 N/mm², 0,75 N/mm², 1,0 N/mm², 1,25 N/mm² oder von mindestens 1,5 N/mm².

Zur Bestimmung der Druckfestigkeit kann das Standardtestverfahren gemäß ASTM D1621 angewendet werden, mittels dem die Druckeigenschaften von harten Schaumstoffen, insbesondere von Hartschaum-Kunststoff, bestimmt und getestet werden können. Ein wesentlicher Vorteil des Einsatzes eines PET-Schaumstoffkerns besteht darin, dass auf weitere Versteifungsmaßnahmen, wie die üblicherweise in die Hohlkammern eingesetzten Stahlversteifungen, verzichtet werden kann. Damit gehen weitere erhebliche Vorteile einher: reduziertes Gewicht und damit Kosten, insbesondere Frachtkosten, sowie eine einfachere Montage. Insbesondere der Einsatz eines PET-Schaumstoffkerns hat sich als besonders vorteilhaft für den Einsatz in gattungsgemäßen Profilen für Tür- und/oder Fenstersysteme beispielsweise in einem Passivhaus herausgestellt. Im Allgemeinen handelt es sich bei dem PET-Schaumstoffkern um einen thermoplastischen Schaumwerkstoff mit hohen mechanischen und thermischen Eigenschaften sowie hoher Resistenz gegenüber Feuchtigkeit. Dadurch kann das Profil die Anforderungen an Statik und Festigkeit erfüllen. Ferner zeichnet sich der PET-Schaumstoffkern durch hohe Wärmedämmungseigenschaften und ein gutes Brandverhalten aus, so dass vor allem Passivhäuser einen guten Dämmwert erzielen können. Beispielsweise kann es sich bei dem Schaumstoff um recycletes und/oder recyclebares Kunststoffmaterial aus PET handeln. Ein weiterer Vorteil liegt in der Verarbeitung des PET-Schaumstoffkerns. Dieser kann auf einfache Weise zugeschnitten und beispielsweise in Längsrichtung beliebig aneinander befestigt werden, beispielsweise auf Stumpf verschweißt werden, so dass im Wesentlichen kein Ausschuss bzw. Abfall entsteht. Der PET-Schaumstoffkern weist eine ausreichende Widerstandskraft gegen ein Herausziehen und/oder Herausreißen einer Verschraubung auf. Ein zusätzliches Verkleben des PET-Schaumstoffkerns mit den Profilwänden des Profils ist nicht notwendig. Dadurch kann das erfindungsgemäße Profil deutlich einfacher recycelt werden. Ferner kann der PET-Schaumstoffkern mit konventionellen Holzverarbeitungsmaschinen verarbeitet werden, so dass eine besonders einfache Formgebung ermöglicht ist, ohne Spezialwerkzeuge und/oder -maschinen zu benötigen.

Gemäß einer beispielhaften Ausführung des erfindungsgemäßen Profils ist der PET-Schaumstoffkern kalibriert, beispielsweise im Celuka-Verfahren hergestellt. Beispielsweise kann der PET-Schaumstoffkern durch Aufschäumen einer aus PET-Granulat und/oder PET-Recyclat gewonnenen PET-Schmelze hergestellt werden. Unmittelbar nach dem Aufschäumen insbesondere im Celuka-Verfahren wird die insbesondere treibmittelhaltige, insbesondere eines physikalischen Treibmittels, Schmelze kalibriert. Mit anderen Worten gelangt die Schmelze unmittelbar nach dem Austritt aus der Düse des Werkzeugs in eine Kalibrierung des Werkzeugs, beispielsweise eine Trockenkalibrierung. Die Kalibrierung kann die gleiche Außenkontur wie die Werkzeugdüse enthalten, sodass die Schmelze an dessen gesamter Oberfläche stark abgekühlt wird, was das thermische Aufschäumen an der Randzone verhindert. Über einen Dorn des Werkzeugs kann ein Hohlraum im Profil erzeugt werden, der ein definiertes Aufschäumen im Innenhohlraum ermöglicht. Als Folge kann ein PET-Schaumstoffkern mit glatter Außenseite und aufgeschäumtem Innenkernbereich entstehen. Auf diese Weise kann die gewünschte Dichte des Schaumstoff-Kerns im Bereich von 80 g/m³ bis 200 kg/m³ erreicht werden. Die Erfinder der vorliegenden Erfindung fanden heraus, dass eine exakte Steuerung der Schaumbildung durch die Massetemperatur in der Werkzeugdüse und den Druckabfall, der beim Austritt aus dem/den Werkzeugspalt(en) in die unmittelbar mit der Werkzeugdüse verbundene Trockenkalibrierung erforderlich ist. Die Temperatur liegt beispielsweise im Bereich von 240° C bis 275° C. Der erforderliche Druck kann beispielsweise im Bereich von 400 bar bis 550 bar liegen. Bevorzugt ist ferner eine Schaumstoffkerndichte von etwa 115 kg/m³. Die Dichteangaben sind als Durchschnittswerte zu verstehen, da die Dichte über den Querschnitt nicht homogen sein kann, sondern zu den Rändern hin zunehmen kann. Dies hängt damit zusammen, dass der PET-Schaumstoffkern gegen eine äußere Begrenzung, nämlich die Kalibrierung, zur Formgebung geschäumt wird.

Der Schaumstoffkern kann chemisch unter Hinzugabe von anorganischen Treibmitteln und Nukleierungsmitteln, wie zum Beispiel Talkum (H2Mg3O2Si4) mit einem Molekulargewicht von 397,27, Natriumbikarbonat (NaHCO3 / CHNaO3), auch als Natriumhydrogenkarbonat bezeichnet, mit einem Molekulargewicht von 84,007 und einer monoisotropen Masse von 83,98, oder Ammoniumkarbonat (CH8N2O3) aufgeschäumt werden. Das Natriumbikarbonat kann ein Mononatriumsalz der Kohlensäure mit alkalinisierenden Eigenschaften sein, das als kristallines Pulver oder in Agglomeraten verwendet werden kann. Die anorganischen Treibmittel und Nukleierungsmittel zersetzen sich bei Erhitzung im Extruder und setzen Gase frei, die das Aufschäumen des aufgeschmolzenen Kunststoffs ermöglichen. Beispielsweise Natriumbikarbonat zerfällt beim Erhitzen über 50 °C, wobei Co2, H2O und Na2Co3 freigesetzt werden, mit vollständiger Zersetzung bei 270 °C. Hierbei kann beispielsweise mit 4,4-Oxybis (Benzolsulfonylhyrazid) der Zerfall gesteuert werden. Ammoniumkarbonat kann in Pulverform eingesetzt werden und weist ein Molekulargewicht von 96,09 und eine monoisotrope Masse von 96,053 auf. Es zerfällt bei Erhitzung unter Bildung von Ammoniak und CO2. Alternativ oder zusätzlich kann 5-(1-Pentylterazol-5-yl)-Benzol-1,3-diamin (C12H18N6) mit einem Molekulargewicht von 246,31 verwendet werden. Alternativ oder zusätzlich zu den anorganischen Treibmitteln und Nukleierungsmitteln können organische Treibmittel und Nukleierungsmittel verwendet werden wie beispielsweise Azodicarbonamid ADC (C2N4H4O2) mit einem Synonym von Azodicaboxamid und Azobisformamid, einem Molekulargewicht von 116,08 und einer Zersetzungstemperatur von 225 °C. Alternativ oder zusätzlich zu den anorganischen und/oder organischen Treibmitteln und Nukleierungsmitteln kann auch physikalisch mittels hochkomprimierter Gase, wie beispielsweise CO₂ oder N₂ im Hochdruckverfahren oder Ethanol, Pentan, Butan im Niederdruckverfahren, aufgeschäumt werden. Des Weiteren ist es denkbar, den Schäumvorgang bei der Herstellung des Schaumstoffkerns mit sogenannten Microspheren durchzuführen, die als in Acrylat-Hohlkügelchen eingeschlossene leicht siedende Flüssigkeiten, wie IsoButan, -Pentan, -Oktan oder dergleichen, bezeichnet werden können und welche wie chemische Treibmittel direkt in das Kunststoff-Granulat oder Kunststoff-Recyclat dosiert werden können. Um das Schäumverhalten des Kunststoff-Granulats oder Kunststoff-Recyclats zu verbessern, den Zerfall bzw. das Platzen von Schaumblasen im Prozess zu reduzieren und ein extrusionsfähiges Verhalten der Kunststoffschmelze zu erzeugen, können Kettenverlängerungsmittel zur Steigerung der intrinsischen Viskosität der Kunststoffschmelze, sogenannte Chain-Extender, in den Extrusionsvorgang eingebracht werden. Als Chain-Extender können organische oder anorganische Zusätze oder Polymere verwendet werden. Als Chain-Extender kann beispielsweise Pyromellitic Dianhydride (PMDA), Diisocyanat, Diepoxid, 1,6-Diisocyanatohexan, 1,4-Butanediol Diglycidylether (EPOX), 1,4-Phenylene-Bis-Oxazoline (PBO), 1,4- Phenylene-Diisocyanat (PDI) und/oder Triphenyl-Phosphit (TPP) verwendet werden.

Gemäß einem weiteren Aspekt der vorliegenden Erfindung, der mit den vorhergehenden Aspekten und beispielhaften Ausführungen kombinierbar ist, ist ein Profil, insbesondere ein Extrusionsprofil, insbesondere ein Koextrusionsprofil oder ein Monoextrusionsprofil, für ein Fenster- und/oder Türteil beispielsweise eines Fenster- und/oder Türsystems, insbesondere für ein Fenster- und/oder Türrahmenteil oder ein Fenster- und/oder Türflügelteil, bereitgestellt. Das Extrusionsprofil kann durch die oben beschriebenen Merkmale gekennzeichnet sein und/oder über die oben beschriebenen Verfahren hergestellt werden.

Das Profil umfasst eine eine Außenseite des Profils bildende Profilwand, insbesondere Hohlprofilwand, aus Kunststoff und einen von der Profilwand umhüllten Schaumstoffkern aus Kunststoff. Der Schaumstoffkern besitzt beispielsweise eine Dichte im Bereich von 80 kg/m³ bis 200 kg/m³, insbesondere von etwa 115 kg/m³.

Beispielsweise ist die Profilwand um den Schaumstoffkern umextrudiert. Auf diese Weise kann ein erfindungsgemäßes Profil einfach durch ein im Wege des Extrudierens erreichtes Umhüllen des Schaumstoffkerns mit einer Kunststoff-Profilwand hergestellt werden. Die Umhüllung des Schaumstoffkerns mittels der Kunststoff-Profilwand erfolgt im Extrusionswerkzeug für die Kunststoff-Profilwand. Mit anderen Worten wird der Schaumstoffkern von der Kunststoff-Profilwand ummantelt, und zwar dadurch, dass das Umhüllen beziehungsweise Ummanteln des PET-Schaumstoffkerns mit der Kunststoff-Profilwand während der Herstellung, also während der Extrusion, der Kunststoff-Profilwand erfolgt. Die Umhüllung beziehungsweise Ummantelung ist demnach in das standardgemäße Extrusionsverfahren zum Herstellen von Kunststoff-Profilwänden für Fenster- und/oder Türteile integrierbar. Durch das Umextrudieren des Schaumstoffkerns mit der Profilwand geht eine besonders formgenaue Verbindung von Schaumstoffkern und Profilwand einher. Als Verbindung ist dabei nicht notwendigerweise eine stoffschlüssige Verbindung von Schaumstoffkern und Profilwand zu verstehen, sondern grundsätzlich eine Anordnung des Schaumstoffkerns innerhalb der Profilwand. Mit anderen Worten ist die Profilwand auf den Schaumstoffkern aufextrudiert. Dadurch kann sich die Profilwand insbesondere formgenau und/oder formanpassend an die Außenseite des Schaumstoffkerns anschmiegen. Beispielsweise kann das Umextrudieren so erfolgen, dass eine Relativbewegung von Schaumstoffkern und Profilwand quer zur Extrusionsrichtung von höchstens 1,5 mm, insbesondere von höchstens 1 mm oder von höchstens 0,5 mm, vorzugsweise ausgeschlossen ist, zugelassen ist. Beispielsweise kann das Umextrudieren so eingestellt sein, dass wenigstens im Bereich der einander zugewandten Grenzflächen von Schaumstoffkern und Profilwand eine materialschlüssige Verbindung einhergeht. Ein Vorteil des Umextrudierens besteht darin, dass es möglich ist, auf herstellungstechnisch einfache Art und Weise beliebige Profilquerschnitte herzustellen. Durch das Umextrudieren des Schaumstoffkerns ist es möglich, für beliebige Querschnitte des Schaumstoffkerns eine Profilwand herzustellen.

Gemäß dem weiteren erfindungsgemäßen Aspekt sind die Profilwand und der Schaumstoffkern in Bezug auf die Extrusionsrichtung form- und/oder kraftschlüssig aneinander befestigt. Durch die Aneinanderbefestigung von Profilwand und Schaumstoffkern kann ein sich Entfernen von Schaumstoffkern und Profilwand in Extrusionsrichtung verhindert werden. Beispielweise kann die Aneinanderbefestigung über eine Verzahnungsstruktur an dem Schaumstoffkern und/oder der Profilwand realisiert werden. Beispielsweise ist die Befestigung von Schaumstoffkern und Profilwand frei von einer stoffschlüssigen Verbindung, wie Schweißen oder dergleichen. Ferner ist es möglich, die Verzahnungsstruktur im Zuge der Extrusion der Profilwand in diese einzubringen. Alternativ kann die Verzahnungsstruktur auch nachträglich eingebracht werden. Dies kann beispielweise durch eine mechanische Verformung oder einen Materialabtrag erfolgen, beispielweise durch Prägen, Bürsten oder dergleichen. Die form- und/oder kraftschlüssige Aneinanderbefestigung von Schaumstoffkern und Profilwand kann auf herstellungstechnisch einfache und kostengünstige Art und Weise erreicht werden, insbesondere ohne der Notwendigkeit, auf separate Verbindungselemente und/oder stoffschlüssige Verbindungsmaßnahmen zurückgreifen zu müssen. Insbesondere durch die bereits im Extrusionsverfahren beziehungsweise bei der Umhüllung des Kerns von der Profilwand realisierbare Befestigung von Profilwand und Schaumstoffkern gestaltet sich die nachträgliche Handhabung der Profile als besonders einfach, da der Schaumstoffkern innerhalb der Profilwand festgehalten und gesichert ist.

In einer weiteren beispielhaften Ausführung der vorliegenden Erfindung belegt der Schaumstoffkern die Profilwandhülle im Wesentlichen vollständig. Alternativ oder zusätzlich ist die Profilwand frei von Hohlkammern bildenden Innenstegen ausgebildet. Mit anderen Worten kann die Profilwand eine im Querschnitt beliebig gestaltbare geschlossene Hohlwandstruktur bilden, die einen einzigen Vollhohlraum begrenzt, der im Wesentlichen vollständig mit Schaumstoffkernmaterial belegt ist. Solche Profile sind somit deutlich weniger komplex als bislang im Stand der Technik bekannte Profile mit komplexen Innenstrukturen und Innenstegen, die nur mit aufwendigen und teuren Werkzeugen herstellbar waren. Die erfindungsgemäßen Profile lassen sich mit kostengünstigen Werkzeugen herstellen.

In einer beispielhaften Ausführung eines erfindungsgemäßen Profils erfolgt die Aneinanderbefestigung von Profilwand und Schaumstoffkern insbesondere ohne separate Befestigungsmittel simultan im Herstellungsprozess des Schaumstoffkerns und/oder der Profilwand und/oder unter Ausnutzung herstellungsspezifischer und/oder werkstoffspezifischer Charakteristika, wie beispielsweise eine temperaturabhängige Expansion und/oder Kontraktion. Die Profilwand und der Schaumstoffkern sind beispielsweise mittels thermischer Expansion des Schaumstoffkerns und/oder mittels thermischer Kontraktion der Profilwand aneinander befestigt. Über die temperaturabhängige Deformation, nämlich die Expansion des Schaumstoffkerns und/oder die Kontraktion der Profilwand, kann erfindungsgemäß eine ausreichende Halte- beziehungsweise Befestigungskraft zwischen Profilwand und Schaumstoffkern aufgebaut werden. Die jeweils andere Komponente, also bei der thermischen Expansion des Schaumstoffkerns die Profilwand und bei der thermischen Kontraktion der Profilwand der Schaumstoffkern, dient als eine Art Wiederlager beziehungsweise Deformationsbegrenzung, da diese Komponente im Vergleich zur anderen sich thermisch deformierenden Komponente bereits ausreichend erstarrt ist und somit zum Aufbau der Befestigungs- beziehungsweise Haltekraft dient.

Gemäß einer beispielhaften Weiterbildung eines erfindungsgemäßen Extrusionprofils ist die Profilwand auf den Schaumstoffkern insbesondere mittels Schwindung aufgeschrumpft. Als aufschrumpfen wird im Allgemeinen ein technisches Verfahren zum kraftschlüssigen Verbinden zweier Komponenten verstanden, dass auf dem Prinzip der Wärmeausdehnung funktioniert. Als Kennwert kann der Wärmeausdehnungskoeffizient herangezogen werden. Unter Schwindung wird vorliegend eine Volumenänderung der Profilwand verstanden, ohne dass ein Materialabtrag und/oder externer Druck ausgeübt wird. Es wurde herausgefunden, dass unter Ausnutzung der herstellungstechnischen Gegebenheiten bei der Kunststoffextrusion die Materialeigenschaft von Kunststoff zur Befestigung der Profilwandhülle mit dem zu umhüllenden Schaumstoffkern ausgenutzt werden kann, um auf herstellungstechnisch kostengünstige und einfache Art und Weise Profilwand und Schaumstoffkern miteinander zu befestigen. Die beim Erstarren des extrudierten Kunststoffmaterials der Profilwand einhergehende Volumenverringerung, insbesondere Schrumpfung, ist ausreichend, um eine geeignete Befestigung zwischen Profilwand und Schaumstoffkern zu erreichen.

Gemäß einer beispielhaften Weiterbildung liegt ein auf das Volumen bezogenes Schwindmaß der Profilwand im Bereich von 0,2 % bis 5 %, insbesondere im Bereich von 0,3 % bis 4 % oder im Bereich von 0,5 % bis 3 %. Ein derartiges Schwindmaß wurde im Hinblick auf den Kompromiss, eine möglichst hohe Haltekraft zwischen Profilwand und Schaumstoffkern zu erzeugen, ohne den Schaumstoffkern zu beschädigen, und der zuverlässigen Aufeinanderabstimmung der Innenabmessung der Profilwand mit der Außenabmessung des Schaumstoffkerns als besonderes geeignet identifiziert.

In einer weiteren beispielhaften Weiterbildung ist der Schaumstoffkern gegenüber einem Vormontagezustand vor dem Aneinanderbefestigen mit der Profilwand komprimiert. Mit anderen Worten kann das Aufschrumpfen der Profilwand insbesondere mittels Schwindung dazu führen, dass der Schaumstoffkern komprimiert wird durch die infolge der Komprimierung der Profilwand einhergehenden Druckkraft auf den Schaumstoffkern. Beispielsweise ist dabei vorgesehen, dass ein Kompressionsgrad des Schaumstoffkerns kleiner als ein Schwindmaß der Profilwand ist. Auf diese Weise bleibt sichergestellt, dass eine Befestigungs- beziehungsweise Haltekraft zwischen Schaumstoffkern und Profilwand erzeugt wird und aufrechterhalten bleibt.

In einer weiteren beispielhaften Ausführung eines erfindungsgemäßen Extrusionprofils weist der Schaumstoffkern eine Oberflächenprofilierung auf. Die Oberflächenprofilierung kann beispielweise durch eine Oberflächenrauheit realisiert sein. Beispielsweise kann die Oberflächenprofilierung beziehungsweise die Oberflächenrauheit bei der Herstellung des Schaumstoffkerns bereits erzeugt werden oder nachträglich eingebracht werden. Die Profilwand ist ferner auf die Oberflächenprofilierung formabgestimmt, sodass sich die Profilwand und die Oberflächenprofilierung miteinander verzahnen. Dies bedeutet, dass die Profilwand eine auf die Schaumstoffkernoberflächenprofilierung formabgestimmte Oberflächenprofilierung aufweisen kann. Die Oberflächenrauheit kann beispielsweise durch Prägen, Bürsten oder anderweitige mechanische Verformung oder einen anderweitigen mechanischen Materialabtrag eingebracht werden. Beispielsweise wird die Oberflächenrauheit rein dadurch erzeugt, dass der Schaumstoffkern aus einem Rohmaterial gesägt oder gefräst wird, sodass die Säge- oder Fräsfläche mit einer ausreichenden Rauheit zum formschlüssigen Verzahnen mit der den Schaumstoffkern umhüllenden Kunststoff-Profilwand versehen ist. Beispielsweise wird die Oberflächenprofilierung nach der Trockenkalibrierung des Schaumstoffkerns in diesen eingebracht. Vorzugsweise erfolgt das Einbringen der Oberflächenprofilierung im noch nicht vollständig abgekühlten und erstarrten Schaumstoffkern.

Gemäß einer weiteren beispielhaften Weiterbildung umfasst die Oberflächenprofilierung wenigstens eine Rille, insbesondere eine Umfangsrille, und/oder wenigstens einen Vorsprung, insbesondere einen Umfangsvorsprung. Die Rille und/oder der Vorsprung ist/sind quer, insbesondere senkrecht, zur Extrusionsrichtung beziehungsweise zur Längserstreckungsrichtung des Profils orientiert. Beispielsweise kann die Profilwand eine auf die wenigstens eine Rille und/oder den wenigstens einen Vorsprung formabgestimmte Innenprofilierung aufweisen, die in die wenigstens eine Rille eingreift und/oder in welche der wenigstens eine Vorsprung eingreift. Beispielsweise kann das ineinander Eingreifen, insbesondere das Verzahnen, durch die thermische Expansion des Schaumstoffkerns und/oder die thermische Kontraktion der Profilwand erreicht oder verstärkt werden. Aufgrund des ineinander Verzahnens quer zur Extrusionsrichtung sind die Profilwand und der Schaumstoffkern so aneinander befestigt, dass ein sich Entfernen des Schaumstoffkerns von der Profilwand unterbunden ist.

Gemäß einer beispielhaften Weiterbildung ist die Oberflächenprofilierung aus einem Stück und/oder in einem Herstellungsschritt mit dem Schaumstoffkern hergestellt. Ferner kann die Innenprofilierung der Profilwand in einem Stück und/oder in einem Herstellungsschritt mit der Profilwand hergestellt sein. Insofern kann die gegenseitige Verzahnung von Schaumstoffkern und Profilwand ohne separate Befestigungsbeziehungsweise Verzahnungselemente erreicht werden.

In einer weiteren beispielhaften Ausführung umfasst die Profilwand PVC und/oder eine Wandstärke im Bereich von 0,2 mm bis 6 mm, insbesondere im Bereich von 0,3 mm bis 5 mm oder im Bereich von 0,4 mm bis 4,5 mm.

Gemäß einer weiteren beispielhaften Ausführung ist der Schaumstoffkern aus einem Kunststoff mit einer mittleren Dichte im Bereich von 80 kg/m³ bis 250 kg/m³, insbesondere im Bereich von 100 kg/m³ bis 200 kg/m³, im Bereich von 110 kg/m³ bis 150 kg/m³, im Bereich von 110 kg/m³ bis 130 kg/m³ oder von etwa 115 kg/m³ beispielsweise aus PET, hergestellt. Die Erfinder der vorliegenden Erfindung haben es geschafft, auch komplizierte Konturen von Schaumstoffkernen mit der gewünschten Dichte für das Anwendungsgebiet bei Tür- und/oder Fensterteilen herzustellen.

In einer beispielhaften Ausführungsform umfasst der Kunststoff der Profilwand und/oder des Schaumstoffkerns Kunststoff-Recyclingmaterial, welches ein Alt-Fenster-Granulat oder -Mahlgut beispielsweise aus Produktionsabfällen der Fenster und/oder Profilproduktion oder ein Gemisch umfassend Kunststoff und mindestens einen Zusatzstoff umfasst, wobei das Alt-Fenster-Granulat oder das Gemisch umfassend Kunststoff und mindestens ein Zusatzstoff einen Masseanteil zwischen 70 Gew.-% und 100 Gew.-% des Gemisches, insbesondere zwischen 80 Gew.-% und 99 Gew.-% des Gemisches, zwischen 90 Gew.-% und 98 Gew.-% des Gemisches oder etwa 95 Gew.-% des Gemisches, aufweist.

"Alt-Fenster-Granulat" im Sinne dieser Erfindung bezeichnet ein Gemisch, welches aus alten, zuvor bereits verbauten Kunststoffrahmen besteht, die nach dem Einsatz erneut verwertet werden, und/oder aus Kunststoffmaterial besteht, welches im Rahmen des Verarbeitungsprozesses beispielsweise beim Fensterhersteller oder beim Ausbau der alten Fenster anfällt. Im Sinne dieser Erfindung können die alten, bereits verbauten Kunststoffrahmen und/oder das Kunststoffmaterial, welches im Rahmen des Verarbeitungsprozesses beispielsweise beim Fensterhersteller oder beim Ausbau der alten Fenster auftritt, bei der Verarbeitung zum Alt-Fenster-Granulat miteinander vermischt werden. Die alten, bereits verbauten Kunststoffrahmen und/oder das Kunststoffmaterial, welches im Rahmen des Verarbeitungsprozesses beispielsweise beim Fensterhersteller oder beim Ausbau der alten Fenster auftritt, können auch separat vorliegen. Beispielsweise wird im Sinne dieser Erfindung ein Kunststoff-Recyclingmaterial für ein erfindungsgemäßes Profil verwendet. Ein Profil aus einem Kunststoff-Recyclingmaterial ist insbesondere deshalb vorteilhaft, da dieses für die Umwelt von Vorteil ist und es sich hierbei um ein CO₂-neutrales Produkt handelt. Durch die erfindungsgemäßen Maßnahmen wird es ermöglicht, ein Profil für Fenster- und/oder Türteile bereitzustellen, bei dem Kunststoff-Recyclingmaterial für nach außen sichtbare Profilflächen eingesetzt wird, sodass die Umweltverträglichkeit der erfindungsgemäßen Profile nach außen erkennbar ist.

In einer weiteren beispielhaften Ausführung eines erfindungsgemäßen Profils nimmt die Dichte des Kunststoffs des Schaumstoffkerns von dessen Zentrum nach Außen kontinuierlich zu. Mit anderen Worten besteht ein Dichtegradient von innen nach außen. Dabei kann die randnahe Dichte wenigstens doppelt, insbesondere dreimal, viermal oder fünfmal, so groß sein, wie die Dichte im Bereich des Zentrums. Die erhöhte Dichte im Randbereich kann beispielsweis infolge der Aneinanderbefestigung von Schaumstoffkern und Profilwand durch Ausnutzung von thermischer Expansion und/oder thermischer Kontraktion erreicht werden.

Beispielweise weist die Profilwand an Ihrer Innenseite oder der Schaumstoffkern an seiner Außenseite wenigstens einen davon vorstehenden, insbesondere aus einem Stück mit der Profilwand beziehungsweise dem Schaumstoffkern ausgebildeten, Anlagevorsprung auf. Der Anlagevorsprung kann flächig an dem Schaumstoffkern beziehungsweise an der Profilwand anliegen und beispielweise kalibriert sein. Beispielsweise ist es ausschließlich der Anlagevorsprung, der mit der Profilwand beziehungsweise dem Schaumstoffkern in Kontakt ist, je nachdem, wo der Anlagevorsprung angeordnet ist. Durch das Vorsehen eines definierten und kalibrierten Anlagevorsprungs ist es möglich, die Maßgenauigkeit in diesem Anlagevorsprung sehr genau einzustellen, sodass Fertigungsungenauigkeiten und Herstellungstoleranzen durch die Kalibrierung des Anlagevorsprungs ausgeglichen werden können.

Gemäß einer beispielhaften Weiterbildung sind an der Profilwand oder an dem Schaumstoffkern mehrere Anlagevorsprünge vorgesehen und ein Abstand zweier benachbarter Anlagevorsprünge beträgt wenigstens 10 mm, insbesondere wenigstens 20 mm. Alternativ oder zusätzlich sind an einem geradlinigen Wandabschnitt der Profilwand oder des Schaumstoffkerns wenigstens zwei Anlagevorsprünge angeordnet. Beispielweise können auch drei, vier, fünf oder mehr Anlagevorsprünge vorgesehen sein, abhängig davon, wie lang der Wandabschnitt ist.

Der Anlagevorsprung kann auch als Distanzrippe oder -noppe angesehen werden, welche grundsätzlich dazu dienen kann, die Herstellungstoleranzen insbesondere für komplexe Profilgeometrien, die im Bereich von +/- 0,2 mm liegen, auszugleichen. Beispielweise gewährleisten profilwandseitige Anlagevorsprünge oder Distanznoppen einen Toleranzausgleich zu dem Schaumstoffkern und/oder vermitteln die Kraftübertragung auf den Schaumstoffkern beim form- und/oder kraftschlüssigen Verbinden, insbesondere unter thermischer Ausdehnung und/oder Kontraktion, des Schaumstoffkerns mit der Profilwand. Beispielweise sind die Anlagevorsprünge oder die Distanznoppen deformierbar. Vorzugsweise kann über die deformierbaren Abstandsvorsprünge die Herstellungstoleranz des Schaumstoffkerns kompensiert werden. Ferner wurde herausgefunden, dass ein vollflächiger Kontakt zwischen Schaumstoffkern und Profilwand sich nachteilig auswirken kann, da Oberflächenfehler, wie Lunker, Einfallstellen oder Maßabweichungen, des Schaumstoffkerns sich auf die außenseitige Profilwand übertragen können. Durch die profilwandseitigen Anlagevorsprünge beziehungsweise Distanznoppen kann die Profilwand von der Herstellungstoleranz beziehungsweise der Oberflächenfehler des Schaumstoffkerns entkoppelt kalibriert werden. Ferner vereinfachen die Anlagevorsprünge die Außengeometrie des Schaumstoffkerns und damit dessen Werkzeugkosten.

Gemäß einem weiteren Aspekt der vorliegenden Erfindung, der mit den vorhergehenden Aspekten und beispielhaften Ausführungen kombinierbar ist, ist ein Fenster- und/oder Türteil, insbesondere ein Fenster- und/oder Türrahmenteil oder ein Fenster- und/oder Türflügelteil, bereitgestellt. Das Fenster- und/oder Türteil ist aus einem erfindungsgemäßen Profil hergestellt. Insofern sind die in Bezug auf die erfindungsgemäßen Profile gemachten Ausführungen und die damit verbundenen Merkmale und technischen Effekte auf erfindungsgemäße Fenster- und/oder Türteile übertragbar. Gemäß einer beispielhaften Weiterbildung eines erfindungsgemäßen Fenster- und/oder Türteils ist das Fenster- und/oder Türteil durch Verschweißen, insbesondere auf Stoß oder durch Eckverschweißen, zweier erfindungsgemäßer Profile hergestellt. Dabei sind jeweils die Profilwände miteinander und die Schaumstoffkerne miteinander verschweißt. Im Gegensatz zu Stand der Technik-Profilen, bei denen stets nur die außenseitige Profilwand verschweißt wurde, können erfindungsgemäß sowohl die Profilwände beider Profile als auch deren Schaumstoffkerne jeweils miteinander verschweißt werden.

Gemäß einem weiteren Aspekt der vorliegenden Erfindung, der mit den vorhergehenden Aspekten und beispielhaften Ausführungen kombinierbar ist, ist ein Verfahren zum Herstellen eines Profils, insbesondere eines Koextrusionsprofils oder eines Monoextrusionsprofils, für ein Fenster- und/oder Türteil, insbesondere ein Fenster- und/oder Türrahmenteil oder ein Fenster- und/oder Türflügelteil, bereitgestellt. Das Verfahren kann derart ausgebildet sein, dass ein erfindungsgemäßes Profil hergestellt wird.

Erfindungsgemäß wird ein Schaumstoffkern aus PET insbesondere mittels Extrusion hergestellt und mit einer eine Außenseite des Profils bildenden Profilwand aus Kunststoff, insbesondere PVC, umhüllt. Der Schaumstoffkern kann beispielsweise durch erzeugen geeigneter Schaumstoffkernprofile in den geeigneten Abmessungen beispielsweise über Sägen oder Fräsen aus Rohware, insbesondere Plattenware, hergestellt werden. Alternativ kann der PET-Schaumstoffkern durch ein urformen des Herstellungsverfahrens, insbesondere Extrusionsverfahren, beispielsweise aus PET-Granulat und/oder PET-Recyclat, insbesondere unter aufschäumen der PET- Schmelze in einem entsprechend formgebenden Werkzeugsystem hergestellt werden.

Gemäß einem weiteren Aspekt der vorliegenden Erfindung, der mit den vorhergehenden Aspekten und beispielhaften Ausführungen kombinierbar ist, ist ein Verfahren zum Herstellen eines Profils, insbesondere eines Extrusionsprofils, insbesondere eines Koextrusionsprofils oder eines Monoextrusionsprofils, für ein Fenster- und/oder Türteil, insbesondere ein Fenster- und/oder Türrahmenteil oder ein Fenster- und/oder Türflügelteil, bereitgestellt. Das Verfahren kann dazu ausgelegt sein, ein erfindungsgemäßes Extrusionsprofil herzustellen. Bei dem erfindungsgemäßen Verfahren wird ein Schaumstoffkern aus Kunststoff insbesondere mittels Extrusion hergestellt und mit einer eine Außenseite des Profils bildenden Profilwand aus Kunststoff, insbesondere PVC, umhüllt, insbesondere ummantelt. Das Umhüllen kann im Extrusionsverfahren und/oder durch Umextrudieren erfolgen.

Ferner werden die Profilwand und der Schaumstoffkern in Bezug auf die Extrusionsrichtung form- und/oder kraftschlüssig aneinander befestigt.

Gemäß einer beispielhaften Weiterbildung des erfindungsgemäßen Verfahrens, wird der Schaumstoffkern kalibriert, insbesondere trocken kalibriert. Beispielsweise erfolgt die Kalibrierung derart, dass der Schaumstoffkern unmittelbar nach dessen Extrusion kalibriert wird, beispielsweise im Celuka-Verfahren. Beispielsweise wird das Herstellungsverfahren in einem Temperaturbereich im Bereich von 220° C bis 275° C und/oder in einem Druckbereich von ca. 300 bar bis 550 bar angewendet.

In einer beispielhaften Weiterbildung des erfindungsgemäßen Verfahrens läuft das Verfahren so ab, dass ein erfindungsgemäßes Profil und/oder ein erfindungsgemäßes Fenster- und/oder Türteil hergestellt wird.

Die vorliegende Erfindung betrifft auch ein Werkzeug, insbesondere ein Extrusionswerkzeug, zum Herstellen eines Profils, insbesondere eines Koextrusionsprofils oder Monoextrusionsprofils, für eine Fenster- und/oder Türteil, insbesondere ein Fenster- und/oder Türrahmenteil oder ein Fenster- und/oder Türflügelteil gemäß der vorliegenden Erfindung.

Bevorzugte Ausführungen sind in den Unteransprüchen angegeben.

Im Folgenden werden weitere Eigenschaften, Merkmale und Vorteile der Erfindung mittels Beschreibung bevorzugter Ausführungen der Erfindung anhand der beiliegenden beispielhaften Zeichnungen deutlich, in denen zeigen:
- Figur 1: eine beispielhafte Ausführung eines Tür- und/oder Fenstersystems mit erfindungsgemäßen Profilen;
- Figur 2: eine weitere beispielhafte Ausführung eines Tür- und/oder Fenstersystems mit erfindungsgemäßen Profilen;
- Figur 3: eine weitere beispielhafte Ausführung eines Tür- und/oder Fenstersystems mit erfindungsgemäßen Profilen;
- Figur 4: eine weitere beispielhafte Ausführung eines Tür- und/oder Fenstersystems mit erfindungsgemäßen Profilen;
- Figur 5: eine weitere beispielhafte Ausführung eines Tür- und/oder Fenstersystems mit erfindungsgemäßen Profilen;
- Figur 6: eine schematische Prinzipskizze zur Herstellung eines erfindungsgemäßen Profils;
- Figur 7: eine weitere schematische Prinzipskizze zur Herstellung eines erfindungsgemäßen Extrusionsprofils; und
- Figur 8: eine schematische Darstellung einer beispielhaften Oberflächenprofilierung zum form- und/oder kraftschlüssigen Aneinanderbefestigen einer Profilwand und eines Schaumstoffkerns einer beispielhaften Ausführung eines erfindungsgemäßen Profils.

In der folgenden Beschreibung beispielhafter Ausführungen der vorliegenden Erfindung ist ein erfindungsgemäßes Profil im Allgemeinen mit der Bezugsziffer 1 versehen, welches in Türen oder Fenstern, insbesondere in Tür- oder Fensterrahmen, eingesetzt wird und beispielsweise ein Rahmenprofil, ein Flügelprofil, ein Verbreiterungsprofil eines Flügels oder eines Rahmens, ein Pfostenprofil, ein Stulpprofil, Stulpflügelprofil, ein Zargenprofil, insbesondere bei Schiebetüren oder Schiebefenstern, oder ein Futterleistenprofil ist. Die Extrusionsrichtung E ist dabei in die Zeichenebene hinein orientiert.

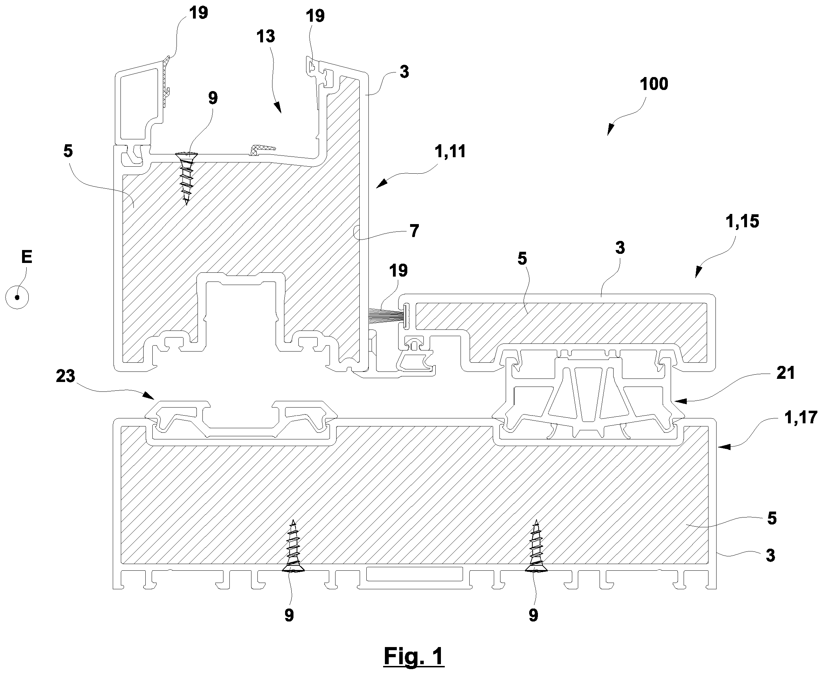

In den beispielhaften Ausführungen der Figuren 1 bis 5 sind die erfindungsgemäßen Profile 1 Teil von Tür- oder Fenstersystemen, die im Allgemeinen mit der Bezugsziffer 100 versehen sind.

Erfindungsgemäße Profile 1 umfassen im Wesentlichen die folgenden Hauptkomponenten: Eine eine Profilaußenseite bildende Profilwand 3, insbesondere Hohlprofilwand; und einen von der Profilwand 3 umhüllten Schaumstoffkern, der bevorzugt eine Dichte im Bereich von 80 kg/m³ bis 150 kg/m³ aufweist. Die Profile 1 sind frei von Hohlkammern bildenden Profilstegen oder Profilwänden, sodass die in Umfangsrichtung geschlossene, also quer zur Extrusionsrichtung E betrachtet, Profilwand 3 einen einzigen Hohlraum 7 begrenzt, der vollständig von dem Schaumstoffkern 5 belegt sein kann. Die Profilwand 3 ist im Extrusionsverfahren hergestellt.

Die Montage erfindungsgemäßer Profile 1 erfolgt derart, dass der Schaumstoffkern 5 von der Profilwand 3 umhüllt wird, und zwar so, dass der Prozessschritt der Umhüllung des Schaumstoffkerns 5 in den Extrusionsschritt zum Herstellen der Profilwand 3 integriert ist. Somit kann vorteilhafterweise die herstellungsspezifische beziehungsweise werkstoffspezifische Eigenart des Kunststoffs, insbesondere PVC, der Profilwand 3 dazu verwendet werden, die Profilwand 3 mit dem Schaumstoffkern 5 aneinander zu befestigen. Durch die Ausnutzung einer temperaturabhängigen Verformung des Schaumstoffkerns 5 und/oder der Profilwand 3 kann eine Befestigungsbeziehungsweise Haltekraft zwischen Profilwand 3 und Schaumstoffkern 5 aufgebaut werden, die ein sich Entfernen von Profilwand 3 und Schaumstoffkern 5 in Extrusionsrichtung E unterbindet. Beispielsweise wird die Profilwand 3 auf den Schaumstoffkern 5 aufgeschrumpft. Dies kann derart erfolgen, dass die beim Abkühlen und Erstarren der extrudierten Kunststoffschmelze bei der Herstellung der Profilwand 3 einhergehende thermische Kontraktion im Querschnitt der Profilwand 3 so eingestellt und dazu verwendet wird, eine Befestigungs- beziehungsweise Haltekraft zu entwickeln. Ferner ist es möglich, zusätzlich die Profilwand 3 mit dem Schaumstoffkern 5 zu verschrauben mittels einer Schraube 9. Aufgrund der erfindungsgemäßen Auswahl des Schaumstoffkerns 5 kann direkt mit dem Schaumstoffkern 5 verschraubt werden. Auf ein Verkleben oder anderweitiges stoffschlüssiges Verbinden sowie auf zusätzliche Schraubenlager, wie Metall-Versteifungsprofile, kann verzichtet werden.

Das in Figur 1 abgebildete Tür- und/oder Fenstersystem 100 weist drei erfindungsgemäß ausgebildete Profile 1 auf, von denen eines als Flügelprofil 11 mit einer Verglasungsnut 13 zum Aufnehmen einer nicht dargestellten Verglasung, ein als Futterleiste 15 ausgebildetes Profil 1 und ferner ein eine Zarge 17 bildendes Profil 1. Das Tür- und/oder Fenstersystem umfasst ferner verschiedene Dichtungen, die vereinfacht mit dem Bezugszeichen 19 versehen sind sowie eine Adapterleiste 21, die aus Kunststoff, insbesondere PVC, insbesondere im Extrusionsverfahren hergestellt ist, sowie eine Führungsleiste 23 aus Kunststoff, insbesondere PVC, die ebenfalls im Extrusionsverfahren hergestellt sein kann.

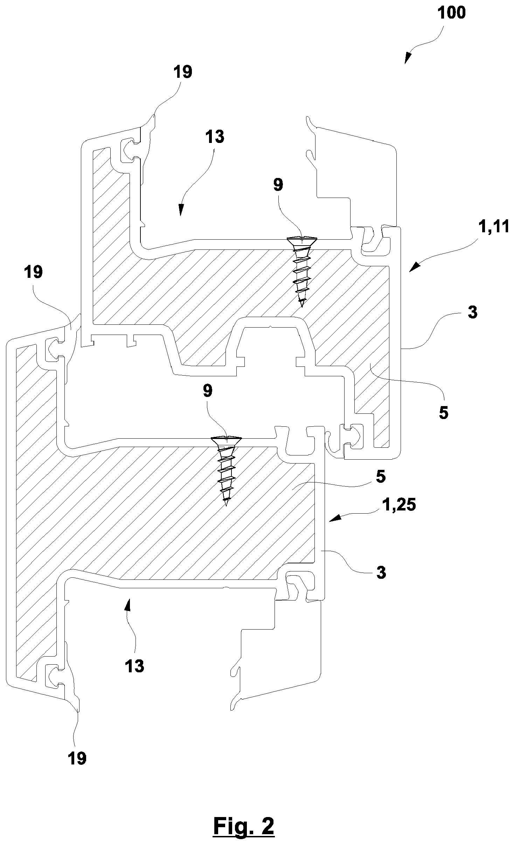

Gleiche Komponenten sind im Folgenden mit gleichen Bezugsziffern versehen. Das Tür- und/oder Fenstersystem 100 aus Figur 2 weist einen Flügel 11 bildendes Profil 1 auf, dass mit einem als Pfostenprofil 25 ausgebildeten erfindungsgemäßen Profil 1 kooperiert. Das Pfostenprofil 25 und das Flügelprofil 11 weisen jeweils eine Verglasungsnut 13 zum Aufnehmen einer nicht abgebildeten Verglasung auf.

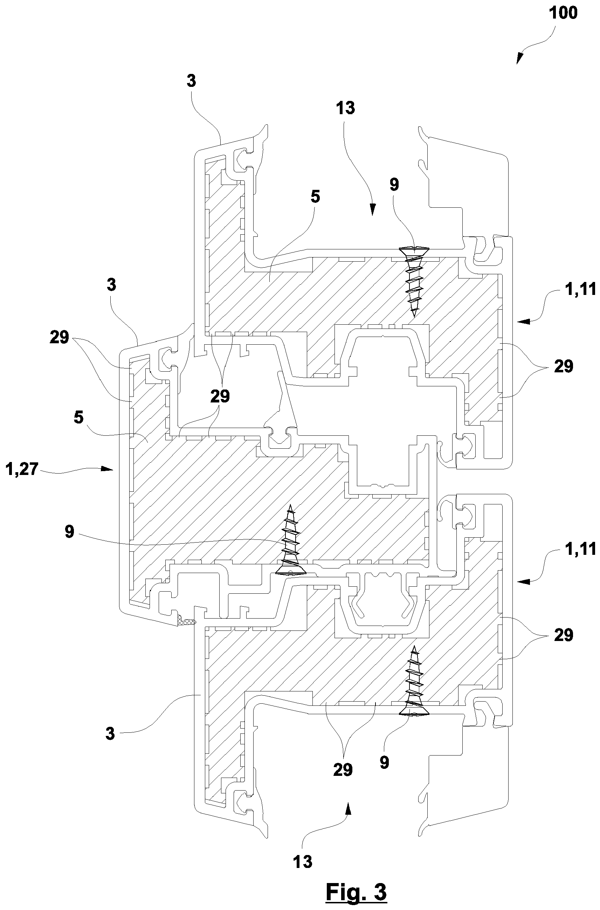

Das in Figur 3 abgebildete Tür- und/oder Fenstersystem 100 ist grundsätzlich ähnlich zu den vorhergehenden Systemen 100 aufgebaut und umfasst ein als Flügelprofil 11 ausgebildetes erfindungsgemäßes Profil 1, welches über ein als Stulpprofil 27 ausgebildetes erfindungsgemäßes Profil 1 mit einem weiteren erfindungsgemäßen Profil 1, welches wiederum als Flügelprofil 11 ausgebildet ist, kooperiert. Im Unterschied zu den vorhergehenden beispielhaften Ausführungen von erfindungsgemäßen Profilen 1 weist der Schaumstoffkern 5 an seiner Außenseite eine Vielzahl von Anlagevorsprüngen 29, die auch als Distanznoppen bezeichnet werden können, zum flächigen Anliegen an einer Innenseite in der Profilwand 3 auf. Die Anlagevorsprünge können kalibriert sein, insbesondere trocken kalibriert. Auf diese Weise können die beim Schäumen von Kunststoff einhergehenden Fertigungstoleranzen ausgeglichen werden, indem definierte, kalibrierte Abschnitte hergestellt werden, welche im Wesentlichen ausschließlich mit der Profilwand 3 in Kontakt geraten. Pro geradlinigem Wandabschnitt des Schaumstoffkerns 5 können wenigstens zwei Anlagevorsprünge 29 vorgesehen sein. Des Weiteren kann vorgesehen sein, dass ein Abstand zweier benachbarter Anlagevorsprünge 29 wenigstens 10 mm, insbesondere wenigstens 20 mm, beträgt.

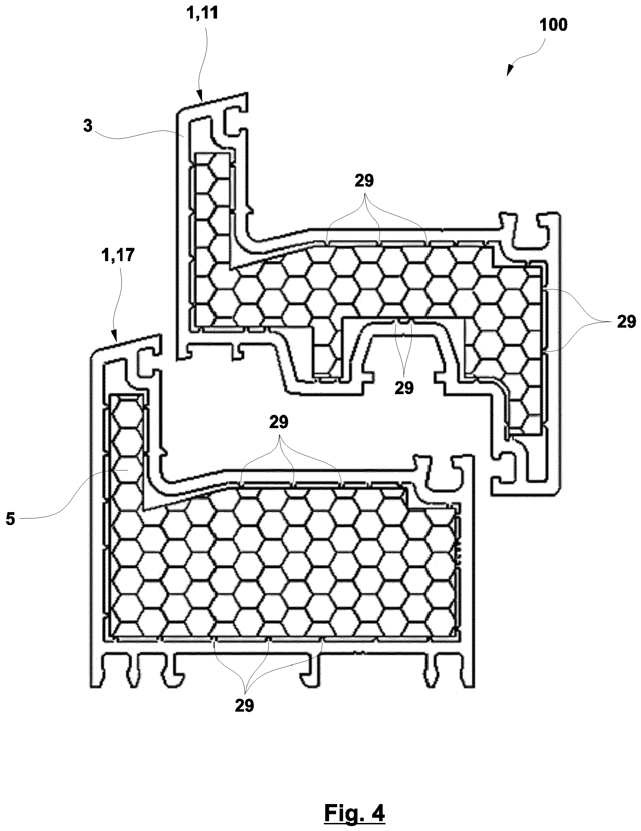

In Figur 4 ist ein alternatives Tür- und/oder Fenstersystem 100 mit Anlagevorsprüngen 29 abgebildet, die im Unterschied zur Ausführung gemäß Figur 3 nicht im Schaumstoffkern, sondern profilwandseitig angeordnet sind. Das Tür- und/oder Fenstersystem 100 gemäß Figur 4 umfasst im Allgemeinen ein als Flügel 11 ausgebildetes Profil 1 sowie ein als Zarge 17 ausgebildetes Profil 1. Die jeweiligen Profilwände 3 weisen an ihrer dem Schaumstoffkern 5 zugewandten Innenseite eine Vielzahl von Anlagevorsprüngen 29 zum Kontaktieren des Schaumstoffkerns 5 auf. Vorzugsweise sind die Anlagevorsprünge 29 deformierbar. Ein Vorteil der deformierbaren, profilwandseitigen Anlagevorsprünge 29 besteht darin, dass beim aneinander Befestigen von Schaumstoffkern 5 und Profilwand 3 unter Ausnutzung der thermischen Deformierbarkeit, insbesondere der Kunststoffschrumpfung im Herstellungs-Extrusionsverfahren der Profilwand 3, über die Deformierbarkeit der Anlagenvorsprünge 29 Herstellungstoleranzen insbesondere des aufgeschäumten Schaumstoffkerns 5 kompensiert werden können.

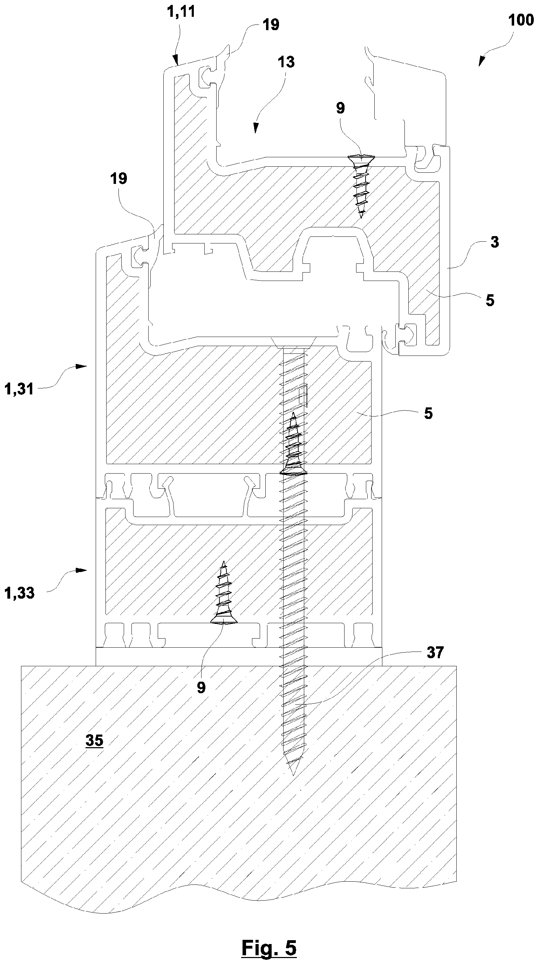

In Figur 5 ist wiederum eine weitere beispielhafte Ausführung eines Tür- und/oder Fenstersystems 100 aus mehreren erfindungsgemäßen Profilen 1 abgebildet, die jeweils ohne Anlagevorsprünge 29 ausgebildet sind, jedoch diese auch aufweisen könnten. Das System 100 umfasst ein als Flügelprofil 11 ausgebildetes Profil 1, ein als Rahmen 31 ausgebildetes erfindungsgemäßes Profil 1 sowie ein zusätzliches als Verbreiterungsprofil 33 ausgebildetes erfindungsgemäßes Profil 1. Das System ist ferner in seinem Montagezustand an einem Bauträger, wie eine Gebäudewand, 35 abgebildet. Über eine Verschraubung 37 sind das Rahmenprofil 31 und das Verbreiterungsprofil 33 mit dem Bauträger 35 verschraubt.

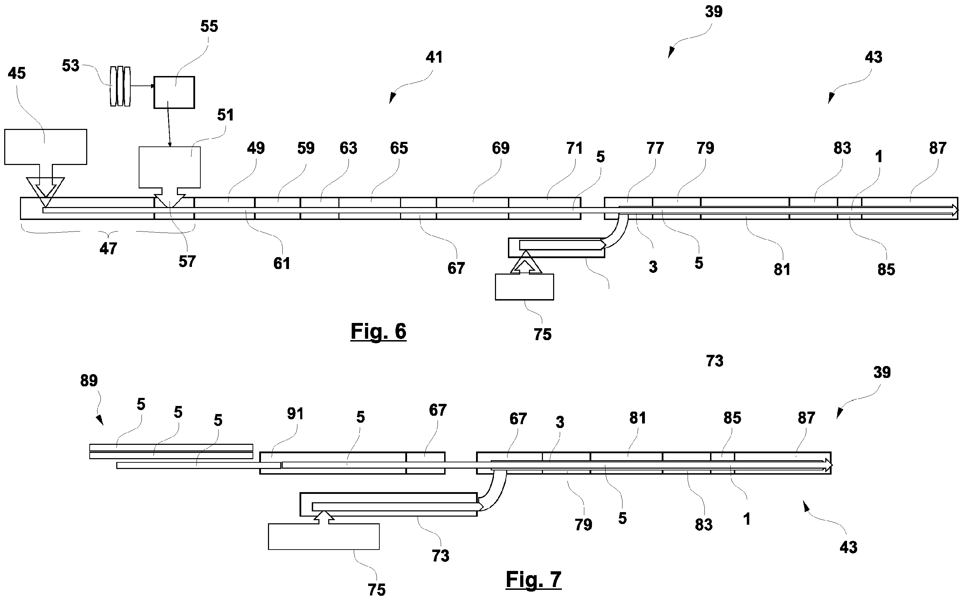

Unter Bezugnahme auf die Figuren 6 und 7, die schematische Prinzipskizzen zu Fertigungsabläufen und Fertigungswerkzeugen zum Herstellen erfindungsgemäßer Profile 1 darstellen, werden beispielhafte Fertigungsabläufe für erfindungsgemäße Profile 1 erläutert.

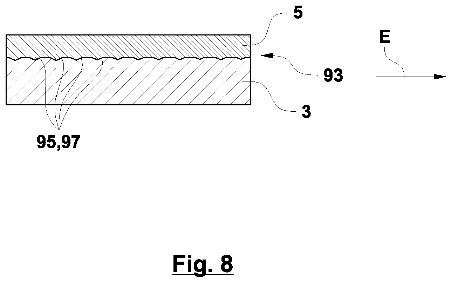

In Figur 6 ist ein erstes Ausführungsbeispiel einer Herstellungsvorrichtung 39 zum Herstellen erfindungsgemäßer Profile 1 abgebildet, die im Wesentlichen zwei Hauptbestandteile umfasst: Die Schaumkernherstellungsanlage 41 und die nachgeschaltete Profilwandherstellungsanlage 43. Die Herstellungsvorrichtung 39 ist von links nach rechts zu verstehen. Mittels der Schaumstoffkernherstellungsanlage 41 wird aus Kunststoffgranulat und/oder -Recyclat unter optionaler Zugabe von chemischen Treibmitteln und/oder einer Nukleierung (Bezugszeichen 45) ein Schaumstoffkern 5 hergestellt. Die Schaumstoffkernherstellungsvorrichtung 41 kann grundsätzlich einen Doppel- oder Einschneckenextruder für die Schaumstoffkernextrusion aufweisen, der im Allgemeinen mit der Bezugsziffer 47 versehen ist. In einer Mischungsstation 49 werden das Kunststoff-Granulat und/oder - Recylat 45 miteinander vermischt und vermengt, wobei vorab in die Kunststoffschmelze ein physikalisches Treibmittel beschickt wird (Bezugszeichen 51). Dazu wird aus einem Flüssiggas-Niederdrucklager physikalisches Treibmittel, wie CO2, N2, Propan, Butan 53 in einer Verdichterstation 55 vorbereitet und schließlich der Kunststoffschmelze zugegeben (Bezugszeichen 57). An die Mischungsstation 49 kann optional ein Statikmischer oder eine Schmelzepumpe 59 anschließen. Anschließend gelangt die hergestellte Schmelze 61 in ein Schäumwerkzeug 63 zum Aufschäumen der Kunststoffschmelze 61. In einer Trockenkalibrierung 65 kühlt der aufgeschäumte Kunststoff ab und erstarrt. An die Trockenkalibrierung 65 kann optional eine Oberflächenstrukturierungsanlage 67, auf die in Bezug auf Figur 8 weiter im Detail eingegangen wird, anschließen. Schließlich wird der vorbereitete Schaumstoffkern 5 in einer Kühlstrecke 69 abgekühlt und über eine Abzugeinrichtung 71 an die Profilwandherstellungsvorrichtung 43 weitergegeben.

Die Profilwandherstellungsvorrichtung 43 umfasst eine Extrusionsvorrichtung 73, die Kunststoff-Granulat, -Dryblend und/oder -Recyclat 75 über ein Extrusionswerkzeug 77 so abgibt, dass im Prozess, das heißt während der Extrusion der Profilwand 3 der Schaumstoffkern 5 umhüllt wird. An das Extrusionswerkezug 77 schließt eine Trockenkalibrierung 79 an, an die wiederum eine Kühlstrecke 81 zum weiteren Erstarren und Abkühlen für die Kunststoff-Profilwand anschließt. Dann kann die Profilwand optional einer Dichtungseinzugsstation 83 zugeführt werden, bevor über eine Trennvorrichtung 85 die Endlos-Profile 1 abgelenkt werden und schließlich in einer Verpackungsstation 85 abtransportiert und gestapelt werden können sowie verpackt werden können.

Die Verbindung beziehungsweise Aneinanderbefestigung von Profilwand 3 und Schaumstoffkern 5 zur Bildung von erfindungsgemäßen Profilen 1 erfolgt unter

Ausnutzung der thermischen Kontraktion des Kunststoffs der Profilwand 3 bereits im Herstellungsprozess der Profilwand 3. Somit kann bereits während der Herstellung der Profilwand 3 eine form- und/oder kraftschlüssige Verbindung zwischen der Profilwand 3 und Schaumstoffkern 5 aufgrund der Schrumpfung des Kunststoffs der Profilwand 3 erreicht werden. Über die optional vorgesehene Oberflächenstrukturierungsstation 67, in den Rillen, insbesondere Umfangsrillen, und/oder Vorsprünge, insbesondere Umfangsvorsprünge, die quer zur Extrusionsrichtung E orientiert sind, in die Außenseite des noch nicht vollständig abgekühlten Schaumstoffkerns eingebracht werden. Alternativ oder zusätzlich kann die Oberflächenprofilierung durch mechanisches Abtragen oder Deformieren, wie bürsten, fräsen oder dergleichen nach der Kühlstrecke 69 erfolgen. Durch das folgende Umhüllen des mit einer Oberflächenprofilierung versehenen Schaumstoffkerns 5 in der Profilwandfertigungsstation 43 wird eine ineinander Verzahnung von Profilwand 3 und Schaumstoffkern 5 erreicht, sodass die Profilwand 3 und der Schaumstoffkern 5 gegen ein sich voneinander entfernen in Extrusionsrichtung E gesichert sind. Während des Schrumpfens des Kunststoffs der Profilwand 3 kann sich die Innenseite der Profilwand 3 so an die Oberflächenprofilierung des Schaumstoffkerns 5 anpassen, dass eine formabgestimmte Innenprofilierung sich in der Profilwand 3 ausbildet, um eine bestmögliche ineinander Verzahnung und Verhakung zu erreichen.

In Figur 7 ist eine weitere beispielhafte Ausführung einer Herstellungsvorrichtung 39 abgebildet. Die Herstellungsvorrichtung 39 gemäß Figur 7 umfasst analog zur Ausführungsform gemäß Figur 6 eine Profilwandherstellungsvorrichtung 43, in der simultan die Profilwand 3 hergestellt und der Schaumstoffkern 5 mit der Profilwand 3 umhüllt wird. Im Unterschied der Ausführungsform gemäß Figur 6 liegt bei der Herstellungsvorrichtung 39 gemäß Figur 7 der Schaumstoffkern 5 bereits als vorgefertigte und vorkonfektionierte Stangenware 89 bereit. Über eine Einschubvorrichtung 91 werden nacheinander die Stangen-Schaumstoffkerne 5 in die Profilwandfertigungsvorrichtung 43 übergeben und der zuvor in Bezug auf Figur 6 beschriebene Herstellungsprozess und Umhüllungsprozess läuft analog ab. Ferner kann auch im Rahmen der Einschubvorrichtung 91 eine Oberflächenstrukturierungsanlage 67 optional anschließen.

Anhand der schematischen Darstellung in Figur 8 ist eine schematische Oberflächenprofilierung, die im Allgemeinen mit der Bezugsziffer 93 versehen ist, zum form- und/oder kraftschlüssigen aneinander Befestigen von Profilwand 3 und Schaumstoffkern 5 abgebildet. Die Oberflächenprofilierung 93 ist über eine Vorsprung-Vertiefung-Struktur 95, 97 an den jeweiligen, einander zugewandten Flächen des Schaumstoffkerns 5 und der Profilwand 3 hergestellt. Somit verhaken und verzahnen sich Profilwand 3 und Schaumstoffkern 5 in Bezug auf die Extrusionsrichtung E miteinander. Wie in Figur 8 zu sehen ist, ist die Oberflächenstrukturierung 93 beziehungsweise die Vorsprung-Vertiefung-Struktur 95, 97 quer zur Extrusionsrichtung E orientiert und/oder aus einem Stück beziehungsweise in einem Herstellungsschritt mit der Profilwand 3 beziehungsweise dem Schaumstoffkern 5 hergestellt.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### BEZUGSZEICHENLISTE

- 1: Extrusionsprofil
- 3: Profilwand
- 5: Schaumstoffkern
- 7: Hohlraum
- 9: Schraube
- 11: Flügelprofil
- 13: Verglasungsnut
- 15: Futterleistenprofil
- 17: Zargenprofil
- 19: Dichtung
- 21: Adapterleiste
- 23: Führungsleiste
- 25: Pfostenprofil
- 27: Stulpprofil
- 29: Anlagevorsprung
- 31: Rahmenprofil
- 33: Verbreiterungsprofil
- 35: Baukörper
- 37: Schraube
- 39: Herstellungsvorrichtung
- 41: Schaumstoffkernherstellungsvorrichtung
- 43: Profilwandherstellungsvorrichtung
- 45: Kunststoff-Granulat und/oder -Recylat
- 47: Doppel- oder Einschneckenextruder
- 49: Mischungsstation
- 51: Beschickung
- 53: Flüssig-Gas-Niederdrucklager
- 55: Verdichterstation
- 57: Beimischung
- 59: Statikmischer/Schmelzepumpe
- 61: Schmelze
- 63: Schäumwerkzeug
- 65: Trockenkalibrierung
- 67: Oberflächenstrukturierungsanlage
- 69: Kühlstrecke
- 71: Abzugsvorrichtung
- 73: Kunststoff-Extrusionsvorrichtung
- 75: Kunststfoff-Granulat und/oder -Dryblend und/oder -Recyclat
- 77: Kunststoff-Extrusionswerkzeug
- 79: Trockenkalibrierung
- 81: Kühlstrecke
- 83: Dichtungseinzugsstation
- 85: Trennvorrichtung
- 87: Abgabevorrichtung
- 89: Schaumstoffkern-Stangenware
- 91: Einzugsvorrichtung
- 93: Oberflächenprofilierung
- 95, 97: Vorsprung-Vertiefung-Struktur
- E: Extrusionsrichtung

## Patentansprüche

1. Profil (1) für ein Fenster- und/oder Türteil, insbesondere ein Fenster- und/oder Türrahmenteil oder ein Fenster- und/oder Türflügelteil, umfassend einen Schaumstoffkern (5) aus PET und eine eine Außenseite des Profils (1) bildende Profilwand (3) aus Kunststoff, die um den Schaumstoffkern (5) umextrudiert ist.

2. Profil (1) nach Anspruch 1, wobei der PET-Schaumstoffkern (5) kalibriert ist, beispielsweise im Celuka-Verfahren hergestellt ist.

3. Profil (1), insbesondere nach Anspruch 1 oder 2, für ein Fenster- und/oder Türteil, insbesondere ein Fenster- und/oder Türrahmenteil oder ein Fenster- und/oder Türflügelteil, umfassend eine, eine Außenseite des Profils (1) bildende Profilwand (3) aus Kunststoff und einen von der Profilwand (3) umhüllten Schaumstoffkern (5) aus Kunststoff, wobei die Profilwand (3) und der Schaumstoffkern (5) in Bezug auf die Extrusionsrichtung (E) form- und/oder kraftschlüssig aneinander befestigt sind.

4. Profil (1) nach einem der vorstehenden Ansprüche, wobei der Schaumstoffkern (5) die Profilwandhülle im Wesentlichen vollständig belegt und/oder die Profilwand (3) frei von Hohlkammern bildenden Innenstegen ausgebildet ist.

5. Profil (1) nach Anspruch 3 oder 4, wobei die Profilwand (3) und der Schaumstoffkern (5) mittels thermischer Expansion des Schaumstoffkerns (5) und/oder mittels thermischer Kontraktion der Profilwand (3) aneinander befestigt sind.

6. Profil (1) nach einem der vorstehenden Ansprüche, wobei die Profilwand (3) auf den Schaumstoffkern (5) insbesondere mittels Schwindung aufgeschrumpft ist.

7. Profil (1) nach Anspruch 6, wobei ein auf das Volumen bezogenes Schwindmaß der Profilwand (3) im Bereich von 0,2% bis 5%, insbesondere im Bereich von 0,3% bis 4% oder im Bereich von 0,5% bis 3%, liegt.

8. Profil (1) nach einem der Ansprüche 5 bis 7, wobei der Schaumstoffkern (5) gegenüber einem Vormontagezustand vor dem Aneinanderbefestigen mit der Profilwand (3) komprimiert ist, wobei insbesondere ein Kompressionsgrad kleiner als ein Schwindmaß der Profilwand (3) ist.

9. Profil (1) nach einem der vorstehenden Ansprüche, wobei der Schaumstoffkern (5) eine Oberflächenprofilierung (93) aufweist und die Profilwand (3) auf die Oberflächenprofilierung (93) formabgestimmt ist, sodass sich die Profilwand (3) und die Oberflächenprofilierung (93) miteinander verzahnen.

10. Profil (1) nach Anspruch 9, wobei die Oberflächenprofilierung (93) quer, insbesondere senkrecht, zur Extrusionsrichtung (E) orientiert ist, insbesondere sodass eine die Profilwand (3) und der Schaumstoffkern (5) in Bezug auf die Extrusionsrichtung (E) positionsfest aneinander befestigt sind.

11. Profil (1) nach Anspruch 9 oder 10, wobei die Oberflächenprofilierung (93) wenigstens eine Rille, insbesondere Umfangsrille, und/oder wenigstens einen Vorsprung, insbesondere Umfangsvorsprung, aufweist, wobei insbesondere die Profilwand (3) eine auf die wenigstens eine Rille und/oder den wenigstens einen Vorsprung formabgestimmte Innenprofilierung aufweist, die in die wenigstens eine Rille eingreift und/oder in welche der wenigstens eine Vorsprung eingreift.

12. Profil (1) nach einem der Ansprüche 9 bis 11, wobei die Oberflächenprofilierung (93) aus einem Stück und/oder in einem Herstellungsschritt mit dem Schaumstoffkern (5) hergestellt ist.

13. Profil (1) nach einem der vorstehenden Ansprüche, wobei die Profilwand (3) PVC umfasst und/oder eine Wandstärke im Bereich von 0,2mm bis 6mm, insbesondere im Bereich von 0,3mm bis 5mm oder im Bereich von 0,4mm bis 4,5mm, aufweist.

14. Profil (1) nach einem der vorstehenden Ansprüche, wobei der Schaumstoffkern (5) aus einem Kunststoff mit einer mittleren Dichte im Bereich von 80 kg/m³ bis 250 kg/m³, insbesondere im Bereich von 100 kg/m³ bis 200 kg/m³, im Bereich von 110 kg/m³ bis 150 kg/m3, im Bereich von 110 kg/m³ bis 130 kg/m³ oder von etwa 115 kg/m³, beispielsweise aus PET, hergestellt ist.

15. Profil (1) nach einem der vorstehenden Ansprüche, wobei der Kunststoff der Profilwand (3) und/oder des Schaumstoffkerns (5) Kunststoff-Recyclingmaterial umfasst, wobei insbesondere Kunststoff-Recyclingmaterial ein Gemisch ist, welches ein Alt-Fenster-Granulat oder -Mahlgut beispielsweise aus Produktionsabfällen der Fenster und/oder Profilproduktion umfasst, wobei das Alt-Fenster-Granulat einen Masseanteil zwischen 70 Gew.-% und 100 Gew.-% des Gemisches, insbesondere zwischen 80 Gew.-% und 98 Gew.-% des Gemisches, zwischen 90 Gew.-% und 97 Gew.-% des Gemisches oder etwa 95 Gew.-% des Gemisches, aufweist.

16. Profil (1) nach einem der vorstehenden Ansprüche, wobei die Dichte des Kunststoffs des Schaumstoffkerns (5) von dessen Zentrum nach außen kontinuierlich zunimmt, wobei insbesondere die randnahe Dichte wenigstens doppelt, insbesondere dreimal, viermal oder fünfmal, so groß ist wie die Dichte im Bereich des Zentrums.

17. Profil (1) nach einem der vorstehenden Ansprüche, wobei die Profilwand (3) an ihrer Innenseite oder der Schaumstoffkern (5) an seiner Außenseite wenigstens einen davon vorstehenden, insbesondere aus einem Stück mit der Profilwand (3) oder dem Schaumstoffkern (5) ausgebildeten, Anlagevorsprung (29) aufweist, der insbesondere flächig an dem Schaumstoffkern (5) oder an der Profilwand (3) anliegt, wobei insbesondere der Anlagevorsprung (29) kalibriert ist.

18. Profil (1) nach Anspruch 17, wobei mehrere Anlagevorsprünge an der Profilwand (3) oder an dem Schaumstoffkern (5) vorgesehen sind und ein Abstand zweier benachbarter Anlagevorsprünge wenigstens 10mm, insbesondere wenigstens 20 mm, beträgt und/oder wobei an einem geradlinigen Wandabschnitt der Profilwand (3) oder des Schaumstoffkerns (5) wenigstens zwei Anlagevorsprünge angeordnet sind

19. Fenster- und/oder Türteil, insbesondere Fenster- und/oder Türrahmenteil oder Fenster- und/oder Türflügelteil, das aus einem Profil (1) gemäß einem der vorstehenden Ansprüche hergestellt ist.

20. Fenster- und/oder Türteil nach Anspruch 19, das durch Verschweißen, insbesondere auf Stoß oder durch Eckverschweißen, zweier nach einem der Ansprüche 1 bis 18 ausgebildeten Profile (1) hergestellt ist, wobei jeweils die Profilwände miteinander und die Schaumstoffkerne miteinander verschweißt sind.

21. Verfahren zum Herstellen eines insbesondere nach einem der vorstehenden Ansprüche ausgebildeten Profils (1) für ein Fenster- und/oder Türteil, insbesondere ein Fenster- und/oder Türrahmenteil oder ein Fenster- und/oder Türflügelteil, bei dem ein Schaumstoffkern (5) aus PET insbesondere mittels Extrusion hergestellt wird und mit einer eine Außenseite des Profils (1) bildenden Profilwand (3) aus Kunststoff, insbesondere PVC, umhüllt wird.

22. Verfahren, insbesondere nach Anspruch 21, zum Herstellen eines Profils (1), insbesondere eines KoProfils oder MonoProfils, für ein Fenster- und/oder Türteil, insbesondere ein Fenster- und/oder Türrahmenteil oder ein Fenster- und/oder Türflügelteil, bei dem ein Schaumstoffkern (5) aus Kunststoff insbesondere mittels Extrusion hergestellt wird und mit einer eine Außenseite des Profils (1) bildenden Profilwand (3) aus Kunststoff, insbesondere PVC, umhüllt wird, wobei ferner die Profilwand (3) und der Schaumstoffkern (5) in Bezug auf die Extrusionsrichtung (E) form- und/oder kraftschlüssig aneinander befestigt werden.

23. Verfahren nach Anspruch 21 oder 22, bei dem der Schaumstoffkern (5) kalibriert wird, insbesondere derart, dass der Schaumstoffkern (5) unmittelbar nach dessen Extrusion kalibriert wird, beispielsweise im Celuka-Verfahren.

24. Verfahren nach einem der Ansprüche 21 bis 23 zum Herstellen eines nach einem der Ansprüche 1 bis 18 ausgebildeten Profils (1) oder eines nach Anspruch 19 oder 20 ausgebildeten Fenster- und/oder Türteils.
